Europäisches Patentamt

European Patent Office

Office européen des brevets

(11) Publication number: **0 492 729 A1**

## EUROPEAN PATENT APPLICATION

(21) Application number: **91203361.0**

(22) Date of filing: **18.12.91**

(51) Int. Cl.5: **B23B 31/22**, B23B 45/00, B23B 49/00, B25B 21/00, B25F 3/00

(30) Priority: **20.12.90 NL 9002830**

(43) Date of publication of application:
**01.07.92 Bulletin 92/27**

(84) Designated Contracting States:
**AT BE CH DE DK ES FR GB GR IT LI LU NL SE**

(71) Applicant: **SKIL NEDERLAND B.V.**
**Konijnenberg 60**
**NL-4825 BD Breda(NL)**

(72) Inventor: **Veltman, Hans**

**Brinkweg 19**
**NL-6991 JN Rheden(NL)**
Inventor: **Moolenaar, Antonie Johannes**
**Cypressenstraat 27**
**NL-4849 AN Dorst(NL)**
Inventor: **Houben, Jan Peter**
**Rechterenstraat 56**
**NL-4834 LV Breda(NL)**

(74) Representative: **Eveleens Maarse, Pieter et al**
**Arnold & Siedsma Sweelinckplein 1**
**NL-2517 GK The Hague(NL)**

(54) **Tool holder.**

(57) The invention relates to a tool holder comprising a coupling piece for coupling to the chuck of a drilling or screwing machine (1), wherein the coupling piece comprises at least one body (9) that is received movably in radial direction in a carrier (6), wherein the body is movable to a position engaging onto the holes (4) arranged in the chuck (2) by a movable locking element and wherein a tool clamped in the chuck can be received inside the tool holder, wherein the locking element is movable in axial direction.

Such a tool holder finds application for instance in the use of a drilling or screwing machine wherein operations are performed requiring the alternating use of two tools. An example of this is the making of screw connections, wherein holes are drilled and screws are rotated into the drilled holes.

The axial movement of the locking element has the result that the actions for locking the tool holder on and releasing it from the chuck take place in the same direction as the respective movements with which the tool holder is placed on the chuck and taken therefrom.

FIG.1

The invention relates to a tool holder comprising a coupling piece for coupling to the chuck of a drilling or screwing machine, wherein the coupling piece comprises at least one body that is received movably in radial direction in a carrier, wherein the bodies are movable to a position engaging onto the holes arranged in the chuck by a movable locking element and wherein a tool clamped in the chuck can be received inside the tool holder.

Such a tool holder is known from DE-A-2613438.

Such a tool holder finds application for instance in the use of a drilling or screwing machine wherein operations are performed requiring the alternating use of two tools. An example of this is the making of screw connections, wherein holes are drilled and screws are rotated into the drilled holes.

It is of course awkward to remove the drill from the chuck after the hole has been drilled and to place a screw bit therein and, for the following screw, to remove the screw bit, chuck a drill bit and bore the hole. Through use of a tool holder of the above stated type the drill bit can remain clamped in the chuck, the screw bit is placed in the tool holder and the tool holder arranged on the chuck, wherein the drill can remain chucked, and the screwing operations can thus be performed. The tool holder is subsequently removed from the chuck, whereafter the following hole can be drilled.

It will be apparent that the convenience and speed with which the tool holder can be placed on the chuck, and once again removed therefrom, is of extremely great importance.

Although the tool holder known from DE-A-2613438 provides a considerable time saving in the above described operations, the actions involved in locking the tool holder on the chuck are ergonomically unattractive; after the tool holder has been arranged on the chuck, it has to be locked by turning a locking ring. This means that in order to fix the tool holder on the chuck actions have to be carried out in two different directions; the tool holder must first be moved onto the chuck with a movement in the axial direction of the drill, while locking must then take place by turning a ring relative to the chuck.

Similar consideration apply for the removal of the tool holder from the chuck; firstly, the locking must be released by turning the locking ring, while the tool holder is then taken off the chuck in axial direction.

The object of the present invention is to provide a tool holder of the above stated type wherein fixing of the tool holder onto the chuck can take place with the simplest possible operations.

This object is achieved in that the locking element is movable in axial direction.

The axial movement of the locking element has the result that the actions for locking the tool holder on and releasing it from the chuck take place in the same direction as the respective movements with which the tool holder is placed on the chuck and taken therefrom.

The present invention will subsequently be elucidated with reference to the annexed drawings, in which:

fig. 1 shows a partly broken away perspective view of a first embodiment of a tool holder according to the invention together with a chuck associated therewith;

fig. 2 is a view partly shown in section of the tool holder depicted in fig. 1 in the situation in which it is arranged on the chuck;

fig. 3 is a view partly shown in section of a second embodiment of the tool holder according to the invention;

fig. 4 is a sectional view along the line IV-IV in fig. 3;

fig. 5 is a side view partly shown in section of a third embodiment of a tool holder according to the invention;

fig. 6 shows a perspective view of a fourth embodiment of a tool holder according to the invention;

fig. 7 is a perspective view of a fifth embodiment of a tool holder according to the invention;

fig. 8 is a perspective view of a drilling machine provided with a coupling member onto which the tool holder according to the invention can be arranged and which functions therein as additional side hand-grip;

fig. 9 shows a view of a storage element for screw bits that is connectable to the tool holder according to the invention;

fig. 10 is a perspective view of another storage element for a tool holder according to the invention;

fig. 11 is a view partly shown in section of a bore depth stop according to the invention; and

fig. 12 is a partly broken away view of a sixth embodiment of the invention.

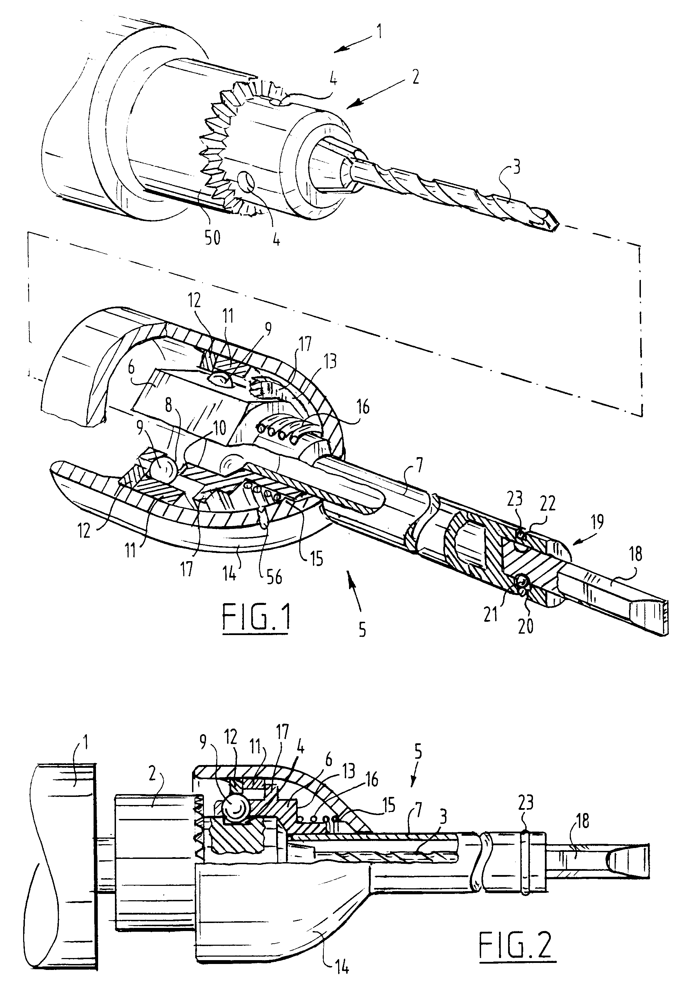

Shown in fig. 1 is a drilling machine 1 provided with a chuck 2. Clamped into the chuck 2 is a drill bit 3. The chuck 2 is further provided with three holes 4 which are used for fixing the drill key during chucking of the tool.

A tool holder 5 according to the invention can be placed onto the chuck. Tool holder 5 comprises a sleeve 6 whereof the internal dimension corresponds with the diameter of the portion of the chuck in which the holes 4 are arranged. The sleeve 6 is fixedly connected to a hollow shank 7, wherein the drill 3 extends through the interior of the hollow shank 7 when the tool holder is arranged on the chuck.

Three holes 8 are arranged in the sleeve 6 at a mutual angular distance of 120°, wherein a ball 9 is arranged in each of the holes 8. In order to prevent the balls 9 falling into the interior of sleeve 6 the holes 8 are provided with a fixation edge 10. Arranged outside the balls 9 is a peripherally extending first ring 11 which in the position drawn in fig. 1 ensures that the balls 9 do not fall outside.

Other bodies can also be employed instead of balls, such as cones or cylinders having for example a rounded top.

Further arranged in addition to the first ring 11 is a second ring 12 whereof the internal diameter is slightly smaller than that of the first ring 11. Both rings 11, 12 are fixed to a housing 14 which is arranged slidably in axial direction on the shank 7. A pressure spring 16 is herein arranged between a shoulder 13 arranged on sleeve 6 and an internal shoulder 15 arranged on housing 14. A stop ring 17 is attached to the shank 7 for locking the housing on the shank. The rings 11, 12 do not have to be completely closed; they must be present only at the location of the balls 9. It is important however that an enclosing body is arranged, for instance in the form of a housing.

It is possible to provide the transition between both rings 11, 12 with a chamfering that is not shown in the drawing. This not only makes for a smoother locking movement of the locking element but also results in a compensation for small variations in the dimensions of the chuck. The action of a slip coupling also results; when too high a moment is transmitted between chuck and tool holder the balls are urged outward. If the transition between ring 11 and 12 is gradual, the balls will shift the rings of the chuck counter to the resilience of the springs 14 so that the balls are released and slipping occurs. The housing can otherwise be manufactured from metal, plastic or other material. It is possible to embody the rings 11 and/or 12 integrally with the housing 14. It is essential that the locking ring 11 is made from wear-resistant material difficult to deform, for instance metal, or a high-quality plastic.

The free end of the shank 7 is provided with a cavity 19, whereof the internal shape corresponds with that of a hexagon for attaching a screw bit 18 with an external hexagon. In order to lock the screw bit 18 an opening 20 is arranged in the wall of the cavity 19, in which opening is arranged a ball 21. The opening 20 is here also provided with an internal edge, not shown in the drawing, to hold the ball 21 in place. Further arranged at the position of the opening 20 is a peripherally extending groove 22 into which is arranged a resilient element, for instance an O-ring 23. It is otherwise also possible to fix the tool by magnet. The tool holder may otherwise be suitable for coupling to other tools. It is for example possible to arrange an internal square for attachment of a tap.

Before the tool holder is placed on the chuck the spring 16 will press the housing 14 in the direction towards the screw bit 18 so that the balls 9 are pressed inward by the second ring 12.

When the tool holder is moved onto the chuck the balls will touch the external edge of the chuck 4, whereby the movement of the sleeve 6 towards the drilling machine is stopped. The user, who is pressing the tool holder onto the chuck with his hand will hereby move the housing 14 towards the drilling machine, whereby the spring 16 is compressed and the ring 11 arrives at the position of the openings 8 so that the balls 9 can be moved to the outside and the sleeve 6 is arranged on the relevant portion of the chuck.

It will subsequently be possible to place the balls 9 in engagement with the holes 4, for instance through light manual turning of the housing 14 relative to the drilling machine. As soon as this has occurred the second ring 12 will constrain the balls to their internal position into locking with the openings 4. It is also possible that, by causing the drilling machine to rotate for the first time after arranging the tool holder, wherein the screw bit 18 undergoes slight resistance, the balls will as it were click into place. Accumulation of dust in the housing after a period of time could affect the good operation of the tool holder. In order to prevent this dust discharge channels 56 can be arranged, for instance through housing 14. It is also possible to provide the rings 11, 12 with interruptions for discharge of dust.

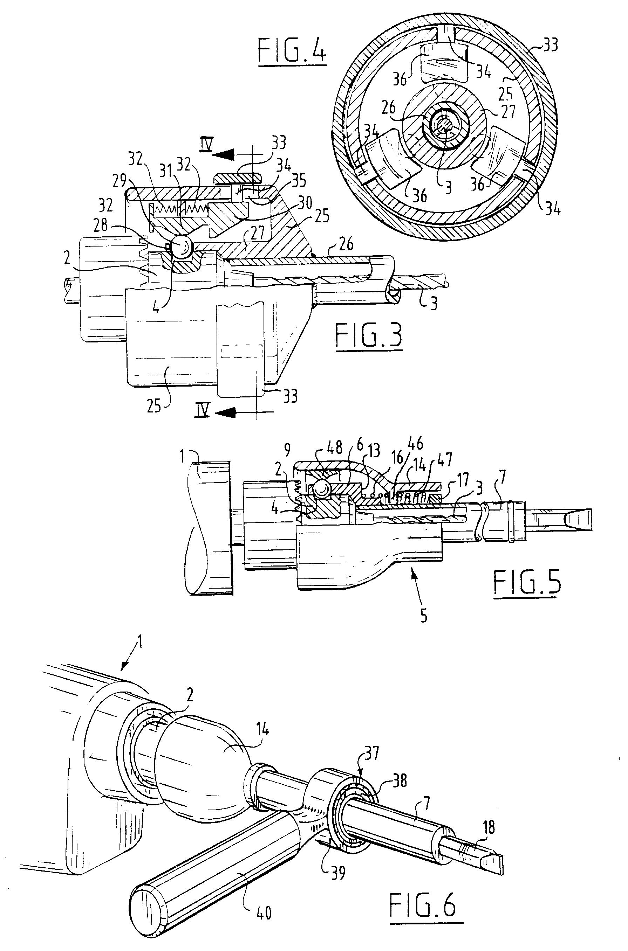

In the embodiment shown in fig. 3 the housing 25 is fixed onto the shank 26. The form of housing 25 is such that it is provided with an internal ring 27 which makes close-fitting connection round the chuck 2 on which is arranged the tool holder according to this embodiment. Arranged once again in the sleeve 27 are three holes 28 in each of which is arranged a ball 29. For locking of balls 29 in the position engaging on the holes 4 a locking ring 30 is arranged which is provided on its inside with an elevated ridge 31. The latter is provided on both sides with sloping flanks 32. To constrain the locking ring 30 to its middle position, wherein it locks ball 29, a number of pairs, for instance three pairs, of spiral springs 32 are arranged. The locking ring 30 is movable by means of an actuating ring 33 which is arranged on the outside of the housing 25 concentric to the housing and locking ring 30. The actuating ring 33 is fixedly connected to the locking ring 30 by means of three connecting pieces 34 extending through slots 35 arranged in the housing 25.

By moving the actuating ring 33 in axial direction from the start position when the tool holder is placed on the drilling machine, wherein the direction of the movement is irrelevant, the tool holder can be fixed onto the chuck. Here, for convenience of use, the user will generally move the ring 33 in the direction of movement; i.e. when the tool holder is moved onto the chuck the actuating ring 33 will be moved to the chuck 3, while when the tool holder is again removed in the direction of movement the ring 33 will initially be moved in the direction away from the chuck, whereafter the tool holder can easily be removed from the chuck.

This embodiment is depicted in section in fig. 4, wherein the locking ring 30 is replaced by three separate locking elements 36.

In such an embodiment a variation is possible by making the housing slidable such as in the embodiment according to fig. 1-3 and wherein, as with the embodiment according to fig. 6, releasing is possible by moving the housing in both directions.

In the embodiment shown in fig. 5, which represents a variant of the embodiment shown in fig. 1, the whole housing 14 is again slidably arranged onto the shank. In this case the housing is movable in two directions relative to the locking position so that in this embodiment only one continuous movement need be made both during placing on the chuck and during removal therefrom.

For this purpose the housing 14 is provided with an internal edge 46 with which the housing is movable over the shank 7. A ring 16 is arranged as in the embodiment of fig. 1 between the ring 46 and shoulder 13, while in the present embodiment a ring 47 is arranged between ring 46 and a stop ring 17 arranged fixedly on shank 7. The housing 14 is hereby constrained to its neutral position. In this neutral position the locking ring 48 fixedly connected to housing 14 locks the balls 9 in the locking position. The locking is released by moving the housing 14 towards or away from the drilling machine.

In the embodiment shown in fig. 6 a bearing 37 is arranged around the shank 7. The internal ring 38 here fits round the shank 7, while the external ring 39 is connected to a hand-grip 40.

The hand-grip serves to guide the drilling machine and therewith of course the screw bit 18. This is important due to the increase in the distance between the tip of the screw bit 18 and the hand-grip of the drilling machine, so that an additional assist means in guiding the screw bit facilitates use.

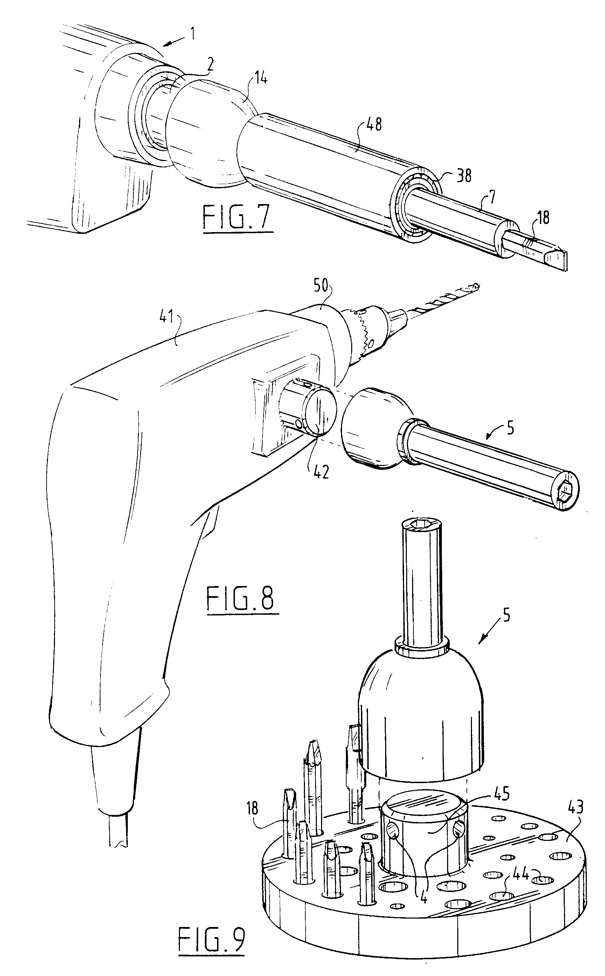

The same consideration applies to the embodiment according to fig. 7, in which a hand-grip 48 extends coaxially of the shank 7. This embodiment further provides the possibility of arranging concentrically of the shank a cup-shaped dust collection element on the stationary hand-grip. This will of course only be of use if the tool holder is carrying a drill bit.

The embodiment of fig. 8 shows a drilling machine 41 provided on one side with a protrusion 42 with the configuration of a chuck. This protrusion enables placing thereon of a tool holder according to the invention which serves here as additional hand-grip.

Such a protrusion can also be arranged on the other side or on both sides of a drilling machine so that the drill can easily be used by both left and right-handers. This protrusion results in a dual function of the tool holder according to the invention. According to an embodiment not shown in the drawings a fixable, rotatable ring is arranged around the collar 50 of drilling machine 1, onto which ring a protrusion 42 is arranged so that the hand-grip formed by the tool holder is rotatable. It is possible to provide the drilling machine with a side hand-grip in which the tool holder according to the invention can be stored.

Fig. 9 shows a disc-shaped holder 43 in which holes are arranged for keeping screw bits and other tools for use with the tool holder according to the invention, such as drill bits. Arranged in the centre of the disc 43 is a protrusion 45 onto which can be fixed the tool holder according to the present invention. An easily manageable unit is thus obtained.

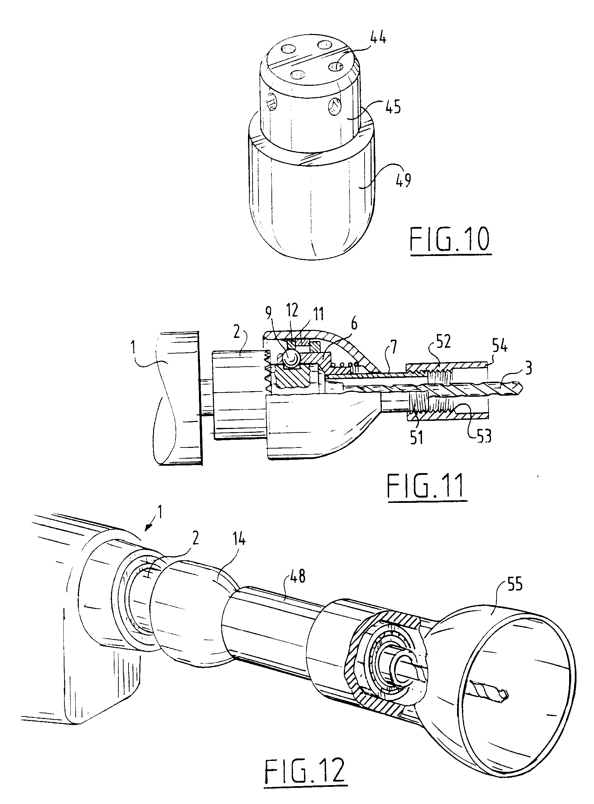

It is however also possible, be it only for a smaller number of bits, to arrange the holes 44 for the screw bits in the top surface of the protrusion. Substituting the disc with a knob-like element 49 and arranging the tool holder on the thus formed carrier results in a hand screwdriver. Such an embodiment is depicted in fig. 10.

Finally, it is noted that the tool holder described up to this point is suitable as such for screw bits. It is also possible however to arrange a chuck on the tool holder. Such an embodiment is attractive for instance when drilling must take place alternately with drills of different diameter.

Fig. 11 shows a drill depth stop according to the invention, wherein use is made of the tool holder shown in fig. 2. Arranged on the free end of the shortened shank is an external screw thread 51. Placed hereon is a sleeve 52 which is provided with an internal screw thread 53 and which is screwed onto the screw thread 51. The free edge 54 of sleeve 53 limits the boring depth. The boring depth can be adjusted by rotating the sleeve 52. To lock the position of the sleeve on the shank 7 a locking member not shown in the drawing, for instance in the form of a snap tool, can be used. The drill depth stop can also be used, in a possibly modified form, when a screw bit is arranged in the chuck. It is then possible to determine the depth of the screw for screwing in.

By arranging a bearing 48 as shown in fig. 7 on the shortened shank of the embodiment shown in fig. 11 and by arranging on the smallest part of the bearing a cup-shaped element 55 resilient in axial direction, manufactured for instance from rubber, the tool holder can serve as dust collector. Such an embodiment is shown in fig. 12.

It is possible to include auxiliary functions in the tool holder; for instance a slip coupling or a moment pick-up can be arranged in the tool holder to limit the maximum generated moment. With use as a screwdriver a screw depth limiter can also be included.

It is otherwise possible to fixedly arrange a screw bit for example in the tool holder according to the invention. The tool holder itself then functions as tool.

It will also be apparent that it is possible to use the tool holder according to the invention for successively performing three or more different operations, for instance drilling, countersinking and screwing. Two tool holders are then necessary.

## Claims

1. Tool holder comprising a coupling piece for coupling to the chuck of a drilling or screwing machine, wherein the coupling piece comprises at least one body that is received movably in radial direction in a carrier, wherein the body is movable to a position engaging onto the holes arranged in the chuck by a movable locking element and wherein a tool clamped in the chuck can be received inside the tool holder, **characterized in that** the locking element is movable in axial direction.

2. Tool holder as claimed in claim 1, **characterized in that** three bodies are received in the carrier.

3. Tool holder as claimed in claim 1 or 2, **characterized in that** the bodies are formed by balls.

4. Tool holder as claimed in claim 1, 2 or 3, **characterized in that** the locking element is constrained by a spring force to the locking position, wherein the bodies engage onto holes arranged in the chuck.

5. Tool holder as claimed in claim 1, 2, 3 or 4, **characterized in that** the locking element is connected to the housing enclosing the coupling piece.

6. Tool holder as claimed in claim 4 or 5, **characterized in that** the locking element releases the body through movement towards the chuck.

7. Tool holder as claimed in claim 4, 5 or 6, **characterized in that** the locking element releases the body through movement away from the chuck.

8. Tool holder as claimed in any of the claims 1-7, **characterized in that** the carrier is formed by an internally round sleeve which fits round the chuck and to which a shank is rigidly connected.

9. Tool holder as claimed in any of the foregoing claims, **characterized in that** the tool holder is equipped to fulfil a tool function.

10. Tool holder as claimed in claim 9, **characterized in that** tool holder and tool form an integral unit.

11. Tool holder as claimed in any of the foregoing claims, **characterized by** attachment means arranged on its free end for fixing a tool.

12. Tool holder as claimed in claim 11, **characterized in that** the attachment means are formed by a cavity with an internal hexagonal configuration.

13. Tool holder as claimed in claim 12, **characterized in that** the cavity is provided with attachment means formed by a ball which is movable in radial direction in the wall of the cavity and which is constrained towards the inside by an elastic element arranged in the outer part of the shank.

14. Tool holder as claimed in any of the claims 1-11, **characterized by** a chuck arranged on its free end.

15. Tool holder as claimed in any of the claims, **characterized by** a support hand-grip rotatably connected to the shank.

16. Drilling or screwing machine, **characterized by** a fixedly arranged coupling member with the configuration of a chuck, which can be coupled to a tool holder as claimed in any of the foregoing claims.

17. Element, **characterized by** a coupling member with the configuration of a chuck, which can be coupled to a tool holder as claimed in any of the claims 1-15.

FIG.1

FIG.2

FIG.4

FIG.3

FIG.5

FIG.6

FIG.7

FIG.8

FIG.9

FIG.10

FIG.11

FIG.12

9

## DOCUMENTS CONSIDERED TO BE RELEVANT.

| Category | Citation of document with indication, where appropriate, of relevant passages | Relevant to claim | CLASSIFICATION OF THE APPLICATION (Int. Cl.5) |
|---|---|---|---|
| Y | US-A-2 381 087 (STEWART) <br> * page 1, right column, line 35 - line 48; figures 2,3 * | 1 | B23B31/22 <br> B23B45/00 <br> B23B49/00 |
| X | --- | 8,9 | B25B21/00 <br> B25F3/00 |
| Y | US-A-3 932 904 (NILSSON) | 1 | |
| X | * column 1, line 53 - column 4, line 31; figures 1-5 * | 2-6, 8-12,16 | |
| A | --- <br> US-A-4 818 157 (KOUVELIS) <br> * column 2, line 46 - line 59; figure 3 * | 13 | |
| A | --- <br> US-A-3 727 258 (BRUECK) <br> * column 2, line 33 - line 44 * | 15 | |
| A | --- <br> EP-A-0 304 002 (HELLER) <br> --- | | |
| A | EP-A-0 083 860 (DUNN) <br> --- | | |
| A | US-A-4 796 319 (TAFT) <br> --- | | TECHNICAL FIELDS SEARCHED (Int. Cl.5) |
| A | US-A-3 484 114 (RODIN) | | |
| | ----- | | B23B <br> B25B <br> B25F |

The present search report has been drawn up for all claims

| Place of search | Date of completion of the search | Examiner |
|---|---|---|
| THE HAGUE | 31 MARCH 1992 | BOGAERT. F.L. |

EPO FORM 1503 03.82 (P0401)